# EUROPEAN PATENT SPECIFICATION

(11) **EP 3 226 380 B1**
(45) Date of publication and mention of the grant of the patent: **06.04.2022**
(21) Application number: 16163209.6
(22) Date of filing: 31.03.2016
(51) Int. Cl.: H02J 9/06, G06F 1/30

(54) **UNINTERRUPTIBLE POWER SUPPLY**
UNUNTERBRECHBARE STROMVERSORGUNG
ALIMENTATION ÉLECTRIQUE SANS INTERRUPTION

(43) Date of publication of application: 04.10.2017
(73) Proprietor: Konica Minolta Business Solutions Europe GmbH, 30855 Langenhagen (DE); 2CRSI UK Ltd., Manchester M17 1PH (GB)
(72) Inventor: Thompson, David J., Manchester, M17 1PH (GB)
(74) Representative: Hoffmann Eitle

(56) References cited:
- WO-A1-2015/065363
- WO-A1-2015/147883
- US-A1- 2008 272 656

## Description

### [Technical Field]

The present invention generally relates to the field of uninterruptible power supplies and, more particularly, to an uninterruptible power supply (UPS) configured to safely shut down a load circuit in the event of an interruption in the delivery of power to the UPS.

### [Background]

Uninterruptible power supplies are widely used to provide emergency power to a variety of electrical devices such as servers, data stores and telecommunication equipment, in order to guard against serious business interruptions or data losses (among other things) that could occur in case of an unexpected loss of input power. When the power source (e.g. mains power) fails, a UPS supplies its load with power from an auxiliary power supply in the UPS, usually comprising batteries. The UPS may also be configured to compensate for one or more common utility power problems, such as voltage spikes, reductions in utility voltage (so-called 'brown-outs'), noise in the power supply line, and instability of the mains frequency.

A UPS is required to store enough energy to allow the protected equipment to shut down safely or an alternative power supply (e.g. a back-up generator) to be brought on-line. In the case of a computer protected by a UPS, the operational status of the UPS may be monitored (via a communication link such as a serial port, USB or Ethernet) by the computer's operating system, which processes the received status reports to determine when to save data and perform any other actions prior to initiating a shut-down sequence.

WO2015/147883 A1 discloses a method for monitoring an uninterruptible power supply system, which includes receiving, at a server, data associated with a first UPS group having a first redundancy level; receiving, at the server, data associated with a second UPS group having a second redundancy level; monitoring the uninterruptible power supply system based on the first redundancy level and the second redundancy level; and based on the monitoring, providing control signals to a first device associated with the first UPS group and a second device associated with the second UPS group.

WO2015/065363 A1 discloses a power supply system comprising an input configured to receive input power from an input power source, an output configured to provide output power to a load, a power factor correction circuit coupled to the input, an inverter coupled to the output, a bus coupled to the power factor correction circuit and the inverter, and a switching circuit coupled to the inverter, the switching circuit configured to direct power from the power factor correction circuit to the inverter when in a first mode of operation and from the bus to the inverter when in a second mode of operation.

US2008/0272656 A1 discloses an apparatus and method for providing standby power to a node of a distributed system of devices. The apparatus includes: a current manager operable to manage supply of current to a device at the node; a normal current supplier operable to supply normal operating current to the device; and a super capacitor at the node operable to supply standby operating current to the device under control of the current manager when the normal current supplier fails to supply the normal operating current to the device. The apparatus preferably further comprises a switching regulator, operable in electrical communication with the super capacitor and the device, to regulate the standby operating current to the device.

### [Summary]

The present inventor has found that, although many kinds of electrical device (e.g. computers, printers, photocopiers etc.) that are protected with a conventional UPS can usually shut down safely in the event of a power cut, the configuration of the conventional UPS does not allow the protected device to start-up automatically when power is subsequently restored, thus necessitating a physical intervention by the user to restore the operational state of the device.

More particularly, the inventor has recognised that, after the device has shut down following a power cut, the conventional UPS remains connected to the device and therefore continually presents a voltage to its power input terminal(s). When power is later restored, this voltage rises to the usual level that the UPS supplies to the device during normal operation. However, the device, not having detected zero voltage at its power supply input terminal(s) after having shut down, will not automatically start up once power has been restored.

An embodiment of the present invention solves this problem by providing a modified UPS which monitors the operational status of the load device after a control signal for shutting down has been generated following an interruption in the supply of power, and disconnects itself from the device once it detects that the device has shut down. When power is later restored, the UPS reconnects itself to the device and presents the device with a voltage sufficient for powering the device. Under these circumstances, the device will automatically start up correctly.

More specifically, the inventor has devised a UPS for supplying power to a load circuit from a power source, the UPS comprising an auxiliary power supply for supplying power to the load circuit in the event of an interruption in supply of power from the power source, a charging/discharging circuit operable to charge the auxiliary power supply from the power source and to discharge the auxiliary power supply through the load circuit, the charging/discharging circuit comprising a switch for connecting the uninterruptible power supply to, and disconnecting the uninterruptible power supply from, the load circuit, a voltage monitor configured to monitor a voltage that is indicative of the supply of power from the power source to the uninterruptible power supply, and a controller configured to: generate a control signal for shutting down the load circuit in response to an interruption in the supply of power from the power source, based on the voltage monitored by the voltage monitor; monitor an operational status of the load circuit after having generated the control signal to determine whether the load circuit has shut down; on determining that the load circuit has shut down, cause the charging/discharging circuit to be disconnected from the load circuit by opening the switch; and after the interruption in supply of power from the power source has ended, cause the charging/discharging circuit to be reconnected to the load circuit by closing the switch.

The inventor has further devised a method of controlling UPS for supplying power to a load circuit from a power source, the UPS comprising: an auxiliary power supply for supplying power to the load circuit in the event of an interruption in supply of power from the power source, a charging/discharging circuit operable to charge the auxiliary power supply from the power source, and to discharge the auxiliary power supply through the load circuit, the charging/discharging circuit comprising a switch for connecting the uninterruptible power supply to, and disconnecting the uninterruptible power supply from, the load circuit, and a voltage monitor configured to monitor a voltage that is indicative of the supply of power from the power source to the uninterruptible power supply. The method comprises: generating a control signal for shutting down the load circuit in response to an interruption in the supply of power from the power source, based on the voltage monitored by the voltage monitor; monitoring an operational status of the load circuit after having generated the control signal to determine whether the load circuit has shut down; on determining that the load circuit has shut down, causing the charging/discharging circuit to disconnect from the load circuit by opening the switch; and after the interruption in supply of power from the power source has ended, causing the charging/discharging circuit to be reconnected to the load circuit by closing the switch.

The inventor has further devised a computer program product, comprising a signal or a non-transitory computer-readable storage medium carrying computer program instructions for execution by a processor provided in a UPS, the UPS further comprising an auxiliary power supply for supplying power to the load circuit in the event of an interruption in supply of power from the power source, a charging/discharging circuit operable to charge the auxiliary power supply from the power source and to discharge the auxiliary power supply through the load circuit, the charging/discharging circuit comprising a switch for connecting the uninterruptible power supply to, and disconnecting the uninterruptible power supply from, the load circuit, and a voltage monitor configured to monitor a voltage that is indicative of the supply of power from the power source to the uninterruptible power supply. The computer program instructions, when executed by the processor, cause the processor to perform a method as set out above.

### [Brief Description of the Drawings]

Embodiments of the invention will now be explained in detail, by way of example only, with reference to the accompanying figures, in which:
Fig. 1 is a schematic illustrating functional components of an apparatus according to an embodiment of the present invention;
Figs. 2A, 2B and 2C are circuit diagrams showing an example of how the functional components of the UPS 100 illustrated in Fig. 1 may be implemented;
Fig. 3 shows a hardware implementation of the controller 140 shown in Fig. 1;
Fig. 4 is a flow diagram illustrating the operation of the UPS of the embodiment; and
Fig. 5 is a flow diagram illustrating operations performed by the controller 140 when the supply of power from the power source 300 is interrupted.

### [Detailed Description of Embodiments]

In the following, the term "exemplary" merely refers to an example, which may or may not be the most preferred example. The remaining terms used in this specification take their usual meaning in the art unless indicated otherwise.

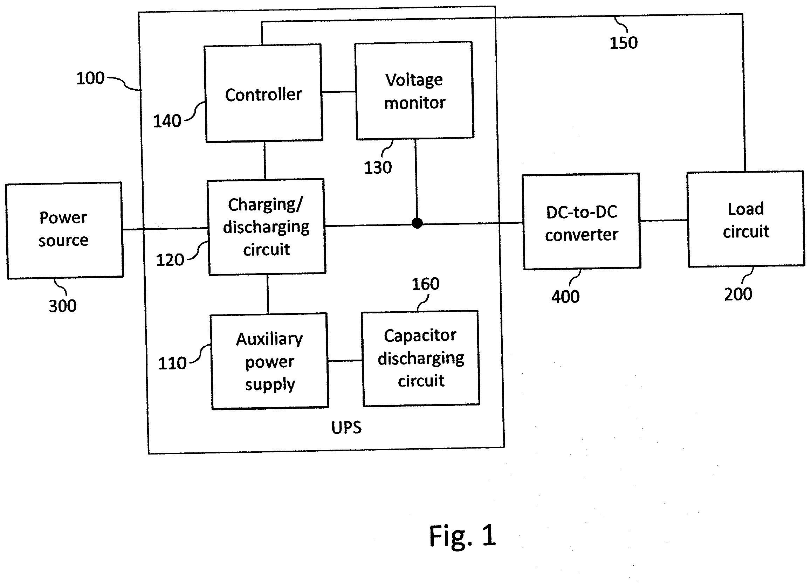

Figure 1 illustrates functional components of an apparatus according to an embodiment of the present invention, comprising a UPS 100 that is configured to supply power from a power source 300 (e.g. an upstream AC-to-DC converter which is connected to mains and configured to function as a constant-current source, as in the present embodiment) to a power input terminal of a load circuit 200. The load circuit 200 may, as in the present embodiment, comprise a microprocessor (or 'CPU') that may form part of a computer motherboard, for example. The load circuit 200 may, more generally, comprise any data processing device (referred to herein as a 'processor') that is configured to perform: (i) a boot sequence to start up an operating system (OS) for the processor when the processor is switched on, and also upon detecting a voltage exceeding a threshold voltage at the power input terminal after the processor has been shut down and the voltage at the power input terminal had been zero following the shut-down; and (ii) a shut-down sequence when the processor receives a control signal for shutting it down.

The apparatus may, as in the present embodiment, further comprise a DC-to-DC converter 400 (provided in the exemplary form of a switched mode power supply) that is arranged to convert a DC voltage output by the UPS 100 (which, in the present embodiment, is between 16 and 28 V) to a voltage (in the present embodiment, an ATX voltage) required by the load circuit 200. The DC-to-DC converter 400 preferably includes a feedback control mechanism configured to monitor the output voltage of the DC-to-DC converter 400, compare the monitored voltage with a reference voltage, and adjust the voltage conversion ratio of the DC-to-DC converter 400 based on the comparison to provide a regulated output voltage for the load circuit 200 that shows little or no variation even when the voltage input to the DC-to-DC converter 400 by the UPS 100 fluctuates over time. Although the DC-to-DC converter 400 is configured to convert the output voltage of the UPS 100 into a single voltage for the load processor, the DC-to-DC converter 400 may alternatively be configured to convert the output voltage of the UPS 100 into more than one voltage for the load processor. In either case, the wide voltage operating range of the DC-to-DC converter 400 allows the processor to be provided with a steady supply of the required voltage(s) while it performs its shut-down procedure.

As illustrated in Fig. 1, the UPS 100 comprises an auxiliary power supply 110 for supplying power to the load circuit 200 in the event of an interruption in the supply of the required power from the power source 300 (e.g. a power cut or a 'brown-out'), and a charging/discharging circuit 120 operable to charge the auxiliary power supply 110 from the power source 300 and to discharge the auxiliary power supply 110 through the load circuit 200. The auxiliary power supply 110 is an energy storage device that may be provided in the form of one or more battery cells, such as nickel-metal hydride (NiMH) or lithium polymer (LiPo) cells, for example. Alternatively, the auxiliary power supply 110 may, as in the present embodiment, comprise a plurality of supercapacitors (although a single larger supercapacitor could, of course, be used instead). More specifically, the auxiliary power supply 110 of the present embodiment comprises 10 supercapacitors, each capable of storing 0.35 Wh of energy. As will be explained in more detail below, since the UPS 100 of the present embodiment is required to store a relatively small amount of energy for powering the load circuit 200 while it shuts down in the event of an interruption in the required delivery of power by the power source 300, it is advantageous for the auxiliary power supply 110 to be provided in the form of one or more supercapacitors, in terms of handling safety, performance and cost. Unlike batteries, supercapacitors are service-free and provide a lifetime of charge/discharge cycles (typically, in excess of one million), and perform well across a wide range of temperatures, typically from about -40 °C to about 85 °C. The ability to perform well at elevated temperatures is important because the UPS 100 may be housed inside computer equipment such as a workstation, PC or server, for example. Supercapacitors may also have a much shorter charging time than batteries; in the present embodiment, the supercapacitors may be fully charged by the power source 300 in less than 50 s via the charging/discharging circuit 120.

Uninterruptible power supplies according to embodiments of the present invention further comprise a voltage monitor, which is configured to monitor a voltage that is indicative of the supply of power from the power source 300 to the UPS. This voltage may, as in the present embodiment, be taken to be the voltage over the auxiliary power supply 110, and the voltage monitor 130 illustrated in Fig. 1 is accordingly arranged to monitor the voltage over the auxiliary power supply 110 at an output of the charging/discharging circuit 120.

The UPS 100 also has a controller 140 which, as will be explained in more detail below, is configured to: generate a control signal for shutting down the processor in the load circuit 200 in response to an interruption in the supply of power from the power source 300, based on the voltage monitored by the voltage monitor 130, and send the control signal to the processor via a communication channel 150 (e.g. a dedicated signal line); monitor an operational status of the processor (via the communication channel 150 or a different channel) after having generated the control signal to determine whether the processor has shut down; cause the charging/discharging circuit 120 to be disconnected from the load circuit 200 on determining that the processor has shut down; and cause the charging/discharging circuit 120 to be reconnected to the load circuit 200 after the interruption in supply of power from the power source 300 has ended. The controller 140 may, as in the present embodiment, also be configured to control various status indicators (which, by way of example, are provided in the form of LEDs) that provide an indication of whether: the DC input to the UPS 100 is receiving power from the power source 300; the auxiliary power supply 110 has been fully charged; the voltage across the auxiliary power supply 110 has reached a level at which the load circuit 200 should be instructed to shut down; the load circuit 200 is in the process of shutting down; the load circuit 200 has shut down; and the UPS 100 has been disconnected from the load circuit 200.

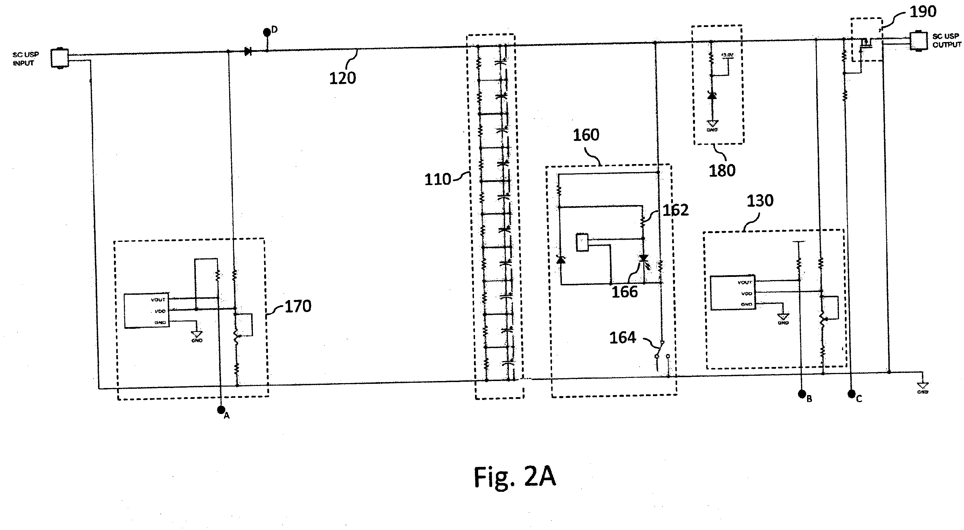

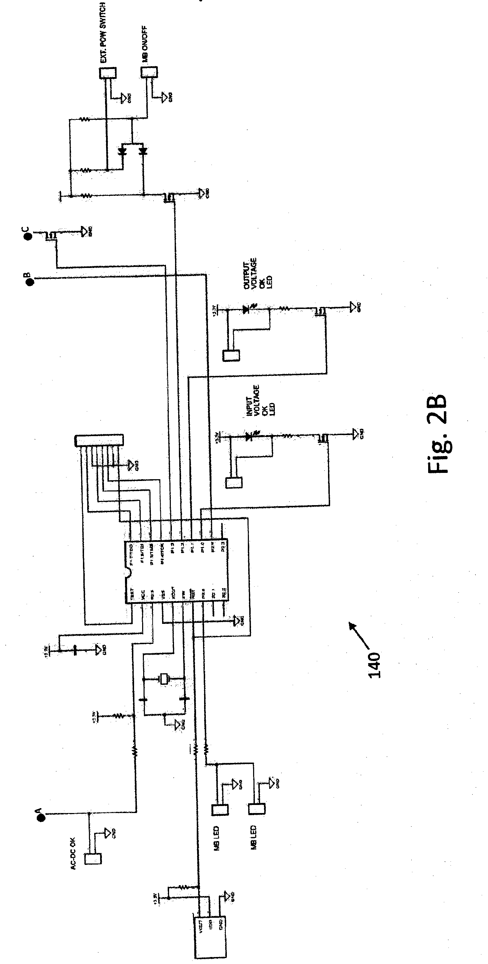

The UPS 100 may, as in the present embodiment, further comprise a capacitor discharging circuit 160, an example of which is illustrated in Fig. 2A. Examples of how the auxiliary power supply 110, the charging/discharging circuit 120 and the voltage monitor 130 of the UPS 100 may be implemented are also shown in Fig. 2A , while an exemplary implementation of the controller 140 is illustrated in Fig. 2B .

As shown in Fig. 2A, the capacitor discharging circuit 160 has a resistive component 162 (in this embodiment, a resistor) and a user-operable switch 164, and is arranged to cause the supercapacitors of the auxiliary power supply 110 to discharge through the resistive component 162 when the user-operable switch 164 is closed by the user so as to connect the capacitor discharging circuit 160 to ground. The capacitor discharging circuit 160 thus allows the supercapacitors to be discharged by a simple manual operation that can easily be performed by the user, e.g. the press of a button or a flick of a switch (which may be regarded as a 'safe transportation mode' switch), and to remain discharged (by the resistive component 162 remaining connected across them) after the switch 164 has been operated by the user. The capacitor discharging circuit 160 may be provided with any suitable means for allowing the user to verify that the supercapacitors have been discharged. For example, in the present embodiment, the extinguishing of a charge state LED 166 confirms that the supercapacitors have been discharged. When the supercapacitors are bridged ('metal strapped') by the capacitor discharging circuit 160, they are completely discharged and thus incapable of causing sparking or any other kind of electrical discharge that could be hazardous in the presence of a flammable material, or a material susceptible to damage by heat, that may be located in the vicinity of the UPS 100. The provision of an auxiliary power supply 110 comprising one or more supercapacitors in combination with the capacitor discharging circuit 160 thus allows the UPS 100 to be easily placed into a 'safe transit/storage' state by the user, in which it is entirely free from restricted transport criteria (for example as defined in the standard UN3499 for air/sea transit of products). Advantageously, the UPS 100 does not need to be plugged into the mains or any external component during the discharging of the supercapacitors.

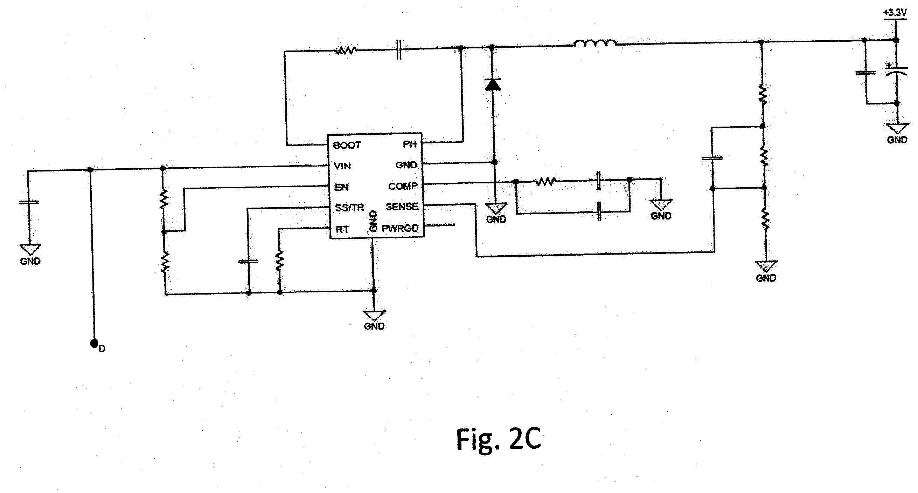

As also illustrated in Fig. 2A, the UPS 100 may, as in the present embodiment, also include an input voltage detector 170 for detecting the input voltage of the UPS 100, and a voltage source 180 configured to provide an operating voltage (e.g. 5 V, as in the present example) for the controller 140 based on the voltage across the supercapacitors. Additional circuitry for generating other operating voltages (e.g. 3.3 V) for the controller 140 may also be provided, as illustrated in Fig. 2C. The charging/discharging circuit 120 of the UPS 100 also has a switch 190 for connecting the UPS 100 to, and disconnecting the UPS from, the load circuit 200, either directly or via any intervening components that may be provided in the apparatus (in this embodiment, the DC-to-DC converter 400).

The UPS 100 may also have surge protection circuits, in-line filtering circuits and other well-known features of modern uninterruptible power supplies, which are not described here in order to avoid obscuring the present invention.

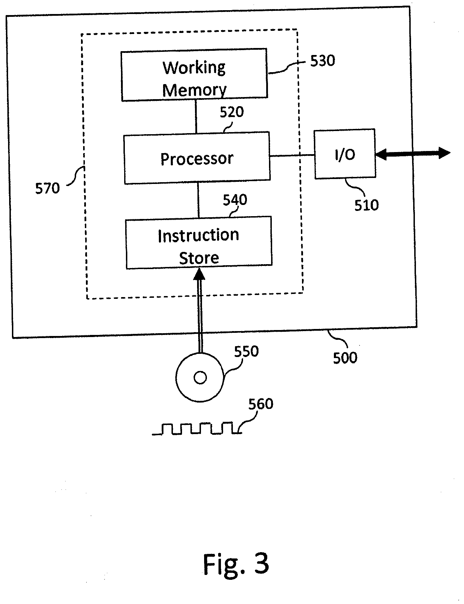

Figure 3 shows an exemplary implementation of the controller 140, in programmable signal processing hardware. The signal processing apparatus 500 shown in Fig. 3 comprises an input/output (I/O) section 510 for receiving the respective voltages (or an indication of the respective voltages) monitored by the input voltage detector 170 and the voltage monitor 130, as well as indications of the operational status of the processor in the load circuit 200, and for outputting control signals for shutting down the processor and controlling the state of switch 190 under certain conditions that are described below. The signal processing apparatus 500 further comprises a processor 520, a working memory 530 and an instruction store 540 storing computer-readable instructions which, when executed by the processor 520, cause the processor 520 to perform the processing operations hereinafter described to safely shut down the processor in the event of an interruption in the supply of power by the power source 300. The instruction store 540 may comprise a ROM which is pre-loaded with the computer-readable instructions. Alternatively, the instruction store 540 may comprise a RAM or similar type of memory, and the computer readable instructions can be input thereto from a computer program product, such as a computer-readable storage medium 550 such as a CD-ROM, etc. or a computer-readable signal 560 carrying the computer-readable instructions.

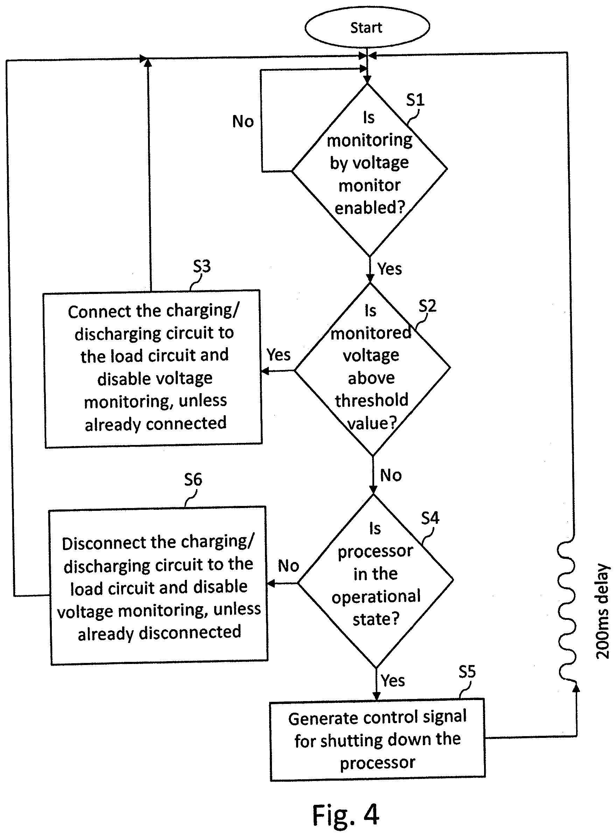

In the present embodiment, the combination 570 of the hardware components shown in Fig. 3, comprising the processor 520, the working memory 530 and the instruction store 540, is configured to implement the functionality of the controller 140, which will now be described in detail with reference to Fig. 4.

Fig. 4 is a flow chart illustrating operations performed by the controller 140 in the present embodiment to manage the delivery of power to the load circuit 200 and the operational state of the load circuit 200, based on the supply of power from the power source 300.

For ease of explanation, it is assumed that the apparatus of the present embodiment begins the processing in Fig. 4 in a state where the power source 300 begins supplying power to the UPS 100, the auxiliary power supply 110 is uncharged, switch 190 is open, and the load circuit 200 is off (i.e. in a non-operational state). The controller 140 determines in step S1 whether voltage monitoring by the voltage monitor 130 is enabled. The monitoring by the voltage monitor 130 is enabled when a substantial change in the supply voltage from the power source 300 is detected, specifically when the input voltage to the UPS 100 is determined by the input voltage detector 170 to increase from below a predetermined level (which, by way of example, is 16 V in the present embodiment) to above the predetermined level, or to have decreased from above the predetermined level to below the predetermined level. In other words, the crossing by the input voltage of a boundary set by the predetermined voltage level triggers the monitoring of the voltage across the auxiliary power supply 110 by the voltage monitor 130. As the applied input voltage increases above the predetermined level in the process of Fig. 4, voltage monitoring by the voltage monitor 130 is then enabled, and the process proceeds to step S2.

In step S2, the controller 140 determines whether the voltage monitored by the voltage monitor 130 exceeds a threshold value (which, by way of example, is 23 V in the present embodiment). As the source voltage is initially dropped mainly across the supercapacitors, the monitored voltage does not exceed the threshold value of 23 V at this stage ("No" in step S2). The process then proceeds to step S4.

In step S4, the controller 140 determines the operational status of the load circuit 200. More specifically, the controller 140 determines whether the processor of the load circuit 200 is in an operational state, i.e. having booted up such that a normal runtime environment is attained. As the processor is in a non-operational state at this stage, having been shut down ("No" in step S4), the process proceeds to step S6.

In step S6, the controller 140 disconnects the charging/discharging circuit 120 from the DC-to-DC converter 400 and disables the voltage monitoring by the voltage monitor 130, unless the charging/discharging circuit 120 is already disconnected from the DC-to-DC converter 400 (in which case the charging/discharging circuit 120 remains disconnected from the DC-to-DC converter 400). As the charging/discharging circuit 120 is still disconnected from the DC-to-DC converter 400 at this stage (by virtue of switch 190 being open, as noted above), the process loops back to step S1. In this way, the controller loops through steps S1, S2, S4 and S6 while the supercapacitors charge up and the voltage monitored by the voltage monitor 130 increases. The voltage monitored by the voltage monitor eventually rises to above the threshold value of 23 V ("Yes" in step S2), and the process proceeds to step S3.

In step S3, the controller 140 connects the charging/discharging circuit 120 to the DC-to-DC converter 400 by closing switch 190 and disables the voltage monitoring by the voltage monitor 130, unless the charging/discharging circuit 120 is already connected to the DC-to-DC converter 400 (in which case the charging/discharging circuit 120 remains connected to the DC-to-DC converter 400). As the charging/discharging circuit 120 is still disconnected from the DC-to-DC converter 400 at this stage, the controller 140 connects the charging/discharging circuit 120 to the DC-to-DC converter 400 by closing switch 190, and disables the voltage monitoring by the voltage monitor 130. The controller 140 then waits in step S1 for the voltage monitoring by the voltage monitor 130 to be enabled. Meanwhile, the UPS 100 is ready to supply power to the load circuit 200 via the DC-to-DC converter 400, and the processor in the load circuit 200 may boot up to bring itself into the normal operational state. As the monitored voltage is above the threshold value and power is being supplied to the load circuit 200 via the UPS 100, the controller 140 causes a power indicator LED to be illuminate continuously, informing the user that the load circuit 200 is being powered by the power source 300.

If the power source 300 is subsequently disconnected from the UPS 100 (or stops supplying power the UPS 100 for any other reason), the charging/discharging circuit 120 will start to supply power to the load circuit 200 by discharging the supercapacitors in the auxiliary power supply 110, thereby ensuring an uninterrupted supply of power to the load circuit 200. Meanwhile, the input voltage will fall below the predetermined level of 16 V, enabling the voltage monitoring by the voltage monitor 130 ("Yes" in step S1). For a time after the supply of power to the UPS 100 by the power source 300 has stopped (which will depend on the current being drawn by the load circuit 200), the voltage monitored by the voltage monitor 130 will remain above the threshold value of 23 V, and the process will loop though steps S1 to S3. The monitored voltage eventually fall to or below the threshold value of 23 V ("No" in step S2), whereupon the process proceeds to step S4.

The controller 140 then determines in step S4 whether or not the load processor is in the aforementioned operational state. As the processor is in the operational state at this stage in the process ("Yes" in step S4), the controller 140 generates a control signal for shutting down the processor, and sends the generated control signal to the processor of the load circuit 200 via the communication channel 150 in step S5. The controller 140 thus delays generating the control signal after the start of the interruption in the supply of power from the power source 300, the delay being dependent on the load presented to the UPS 100 by the load circuit 200 and any intervening components (in this embodiment, the DC-to-DC converter 400). The load-dependent delay that occurs between the loss of external power and the generation of the control signal allows minor interruptions (glitches) in the delivery of power by the power source 300 to be ignored whilst still allowing the processor ample time to shut down safely.

The processor 140 may, as in the present embodiment, then wait for a period of time (e.g. 10 to 500 ms, preferably 200 ms) before repeating the processes of comparing the monitored voltage with the threshold value (step S2), determining whether or not the processor is in the operational state (S4), and issuing an instruction for the processor to shut down after determining that the processor is still in the operational state (step S5). In this way, the controller 140 monitors the operational state of the processor in the load circuit 200 after having generated the control signal, and generates and transmits to the load circuit 200 one or more further control signals, each requesting the processor to shut down. The repeated transmission of such shut-down requests was found by the inventor to be necessary to ensure a reliable shut-down of some kinds of processor, which do not shut down reliably in response to a single shut-down request.

After the processor has shut down in response to the control signal or one of the subsequently generated control signals (as the case may be), the controller 140 will determine from its monitoring of the processor's operational status that the processor has shut down ("No" in step 54), and consequently cause the charging/discharging circuit 120 to be disconnected from the DC-to-DC converter 400 and the load circuit 200, by opening the switch 190 in step S6. At this point, the monitoring of the voltage across the auxiliary power supply 110 by the voltage monitor 130 ceases. To inform the user that the UPS 100 is no longer connected to its down-stream components, the controller 140 preferably causes the aforementioned power indicator LED to change from being continuously illuminated to instead emit light in pulses (i.e. blink) in step S6. The process then loops back to step S1, where the controller 140 waits for the monitoring operation of the voltage monitor 130 to be enabled. The waiting that is achieved by repeatedly performing step S1 until voltage monitoring is enabled reduces the controller's power consumption when the UPS 100 is either conveying power from the power source 300 to the load circuit 200 or standing by after the power source 300 has stopped supplying power and the load circuit 200 has shut down.

When the interruption in the delivery of power to the UPS 100 by the power source 300 ends, the input voltage monitor 170 will thereafter detect that the input voltage of the UPS 100 exceeds the prescribed level of 16 V. In response, the controller 140 will cause the voltage monitor 130 to resume monitoring the voltage across the auxiliary power supply 110 ("Yes" in step S1). Meanwhile, the charging/discharging circuit 120 will charge the auxiliary power supply 110, and the voltage across the auxiliary power supply will exceed the threshold value of 23 V (at a time that depends on the supercapacitors' state of charge when the power supply interruption ends). When the controller 140 determines in a repeat of step S2 that the monitored voltage across the auxiliary power supply 110 exceeds the threshold value ("Yes" in step S2), the controller 140 controls the switch 190 to close in step S3, thereby reconnecting the charging/discharging circuit 120 to the load circuit 200. In this case, the processor in the load circuit 200, upon detecting a change in its supply voltage from zero to a level required for normal operation, automatically initiates its booting sequence to bring it into the operational state. This automatic start-up operation can be achieved, for example, by configuring the BIOS of the processor to 'AC Recovery'.

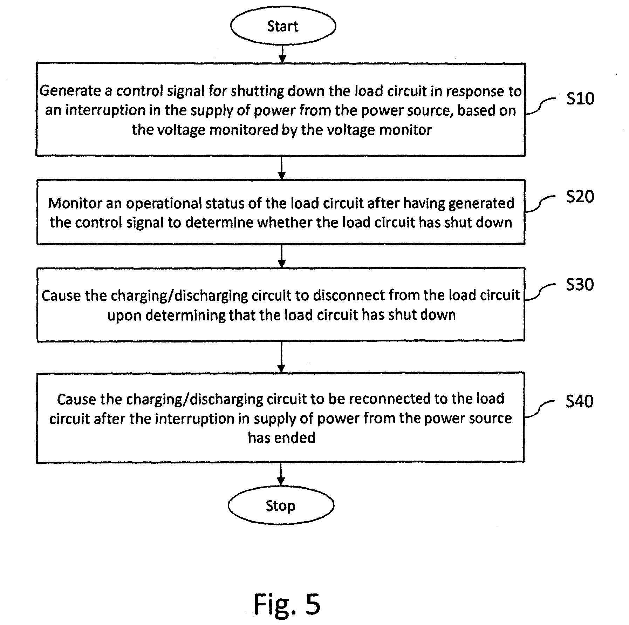

The operations performed by the controller 140 of the UPS 100 when the supply of power from the power source 300 is interrupted are summarised in the flow chart shown in Fig. 5. In step S10, the controller 140 generates a control signal for shutting down the load circuit 200 in response to an interruption in the supply of power from the power source 300, based on the voltage monitored by the voltage monitor 130. In step S20, the controller 140 monitors an operational status of the load circuit 200 after having generated the control signal to determine whether the load circuit 200 has shut down. In step S30, the controller 140 causes the charging/discharging circuit 120 to disconnect from the load circuit 200 upon determining that the load circuit 200 has shut down. Then, in step S40, the controller 140 causes the charging/discharging circuit 120 to be reconnected to the load circuit 200 after the interruption in supply of power from the power source 300 has ended.

### [Modifications and Variations]

Many modifications and variations can be made to the embodiments described above.

For example, although the delay with which the controller 140 generates the control signal after an interruption in the delivery of power is determined in the above-described embodiment by monitoring a voltage across the supercapacitors and determining when this voltage has fallen to a threshold value, the delay may be provided in other ways. For example, the delay may alternatively be provided by monitoring the voltage across the supercapacitors and the current drawn by the load circuit 200, calculating the remaining time that the load circuit 200 may be powered by the UPS 100 based on the monitored voltage and current, and generating the control signal when the calculated remaining time reaches a minimum time sufficient for a safe shut-down of the load circuit 200.

The apparatus of the above-described embodiment shown in Fig. 1 is provided with a power source 300 in the exemplary form of a AC-to-DC converter for converting a received AC mains voltage to a DC voltage for the UPS 100, and a DC-to-DC converter 400 for converting the DC voltage output by the UPS 100 into another DC voltage that is required by the load circuit 200. However, in other embodiments, the power source 300 may be provided in the alternative form of a DC-to-DC converter for converting a received DC voltage to another DC voltage for the UPS 100, and either a DC-to-DC converter or a DC-to-AC converter for converting the DC voltage output by the UPS 100 into a DC or AC voltage (as the case may be) for the load circuit 200.

## Claims

1. An uninterruptible power supply (100) for supplying power to a load circuit (200) from a power source (300), the uninterruptible power supply (100) comprising:
an auxiliary power supply (110) for supplying power to the load circuit (200) in the event of an interruption in supply of power from the power source (300);
a charging/discharging circuit (120) operable to charge the auxiliary power supply (110) from the power source (300) and to discharge the auxiliary power supply (110) through the load circuit (200), the charging/discharging circuit (120) comprising a switch (190) for connecting the uninterruptible power supply (100) to, and disconnecting the uninterruptible power supply (100) from, the load circuit (200);
a voltage monitor (130) configured to monitor a voltage that is indicative of the supply of power from the power source (300) to the uninterruptible power supply (100); and
a controller (140) configured to:
generate a control signal for shutting down the load circuit (200) in response to an interruption in the supply of power from the power source (300), based on the voltage monitored by the voltage monitor (130);
monitor an operational status of the load circuit (200) after having generated the control signal to determine whether the load circuit (200) has shut down;
on determining that the load circuit has shut down, cause the charging/discharging circuit (120) to be disconnected from the load circuit (200) by opening the switch (190); and
after the interruption in supply of power from the power source (300) has ended, cause the charging/discharging circuit (120) to be reconnected to the load circuit (200) by closing the switch (190).

2. An uninterruptible power supply (100) according to claim 1, wherein the controller (140) is configured to delay generating the control signal for shutting down the load circuit (200) after the start of the interruption in the supply of power from the power source (300), said delay being dependent on the load presented to the uninterruptible power supply (100) by the load circuit.

3. An uninterruptible power supply (100) according to claim 2, wherein the voltage monitor (130) is configured to monitor a voltage over the auxiliary power supply (110), and the controller (140) is configured to generate the control signal for shutting down the load circuit (200) when the voltage over the auxiliary power supply (110) has decreased to a threshold value.

4. An uninterruptible power supply (100) according to any of claims 1, 2 and 3, wherein the auxiliary power supply (110) comprises one or more capacitors, the uninterruptible power supply further comprising a capacitor discharging circuit (160) having a resistive component (162) and a user-operable switch (164), the capacitor discharging circuit (160) being arranged so as to cause the one or more capacitors to discharge through the resistive component (162) when the user-operable switch (164) is operated by the user.

5. An uninterruptible power supply (100) according to any preceding claim, wherein the controller (140) is configured to generate, as the control signal for shutting down the load circuit, a sequence of requests for the load circuit (200) to shut down.

6. An uninterruptible power supply (100) according to any preceding claim, wherein the auxiliary power supply (110) comprises one or more supercapacitors.

7. An uninterruptible power supply (100) according to any preceding claim, wherein the load circuit (200) comprises a processor.

8. An uninterruptible power supply (100) according to claim 7, wherein the load circuit (200) comprises a computer motherboard having the processor.

9. An apparatus comprising an uninterruptible power supply (100) according to any preceding claim and the load circuit (200), the load circuit (200) being controllable by the controller (140) to shut down and configured to start up upon detecting a voltage above a predetermined level being input thereto by the uninterruptible power supply (100).

10. An apparatus according to claim 9, further comprising a DC-to-DC converter (400) arranged to convert an output voltage of the charging/discharging circuit (120) to a voltage for powering the load circuit (200).

11. A method of controlling an uninterruptible power supply (100) for supplying power to a load circuit (200) from a power source (300), the uninterruptible power supply (100) comprising:
an auxiliary power supply (110) for supplying power to the load circuit (200) in the event of an interruption in supply of power from the power source (300);
a charging/discharging circuit (120) operable to charge the auxiliary power supply (110) from the power source (300), and to discharge the auxiliary power supply (110) through the load circuit (200), the charging/discharging circuit (120) comprising a switch (190) for connecting the uninterruptible power supply (100) to, and disconnecting the uninterruptible power supply (100) from, the load circuit (200); and
a voltage monitor (130) configured to monitor a voltage that is indicative of the supply of power from the power source (300) to the uninterruptible power supply (100);
the method comprising:
generating (S10) a control signal for shutting down the load circuit (200) in response to an interruption in the supply of power from the power source (300), based on the voltage monitored by the voltage monitor (130);
monitoring (S20) an operational status of the load circuit (200) after having generated the control signal to determine whether the load circuit (200) has shut down;
upon determining that the load circuit (200) has shut down, causing (S30) the charging/discharging circuit (120) to disconnect from the load circuit (200) by opening the switch (190); and
after the interruption in supply of power from the power source (300) has ended, causing (S40) the charging/discharging circuit (120) to be reconnected to the load circuit (200) by closing the switch (190).

12. A method according to claim 11, wherein the generation of the control signal for shutting down the load circuit (200) is delayed after the start of the interruption in the supply of power from the power source (300), said delay being dependent on the load presented to the uninterruptible power supply (100) by the load circuit.

13. A method according to claim 12, wherein a voltage over the auxiliary power supply (110) is monitored, and the control signal for shutting down the load circuit (200) is generated when the voltage over the auxiliary power supply (110) has decreased to a threshold value.

14. A storage medium (550) storing computer program instructions for execution by a processor (520) provided in an uninterruptible power supply (100), the uninterruptible power supply (100) further comprising:
an auxiliary power supply (110) for supplying power to the load circuit (200) in the event of an interruption in supply of power from the power source (300);
a charging/discharging circuit (120) operable to charge the auxiliary power supply (110) from the power source (300) and to discharge the auxiliary power supply (110) through the load circuit (200), the charging/discharging circuit (120) comprising a switch (190) for connecting the uninterruptible power supply (100) to, and disconnecting the uninterruptible power supply (100) from, the load circuit (200); and
a voltage monitor (130) configured to monitor a voltage that is indicative of the supply of power from the power source (300) to the uninterruptible power supply (100),
wherein the computer program instructions, when executed by the processor (520), cause the processor (520) to perform a method as set out in any of claims 11 to 13.

15. A signal (560) carrying computer program instructions for execution by a processor (520) provided in an uninterruptible power supply (100), the uninterruptible power supply (100) further comprising:
an auxiliary power supply (110) for supplying power to the load circuit (200) in the event of an interruption in supply of power from the power source (300);
a charging/discharging circuit (120) operable to charge the auxiliary power supply (110) from the power source (300) and to discharge the auxiliary power supply (110) through the load circuit (200), the charging/discharging circuit (120) comprising a switch (190) for connecting the uninterruptible power supply (100) to, and disconnecting the uninterruptible power supply (100) from, the load circuit (200); and
a voltage monitor (130) configured to monitor a voltage that is indicative of the supply of power from the power source (300) to the uninterruptible power supply (100),
wherein the computer program instructions, when executed by the processor (520), cause the processor (520) to perform a method as set out in any of claims 11 to 13.

## Patentansprüche

1. Unterbrechungsfreie Stromversorgung (100) zum Versorgen eines Lastschaltkreises (200) mit Strom
von einer Stromquelle (300), wobei die unterbrechungsfreie Stromversorgung (100) umfasst:
eine Hilfsstromversorgung (110) zum Versorgen des Lastschaltkreises (200) mit Strom im Fall einer Unterbrechung der Stromversorgung durch die Stromquelle (300);
einen Lade-/Entladeschaltkreis (120), der betriebsfähig ist, die Hilfsstromversorgung (110) von der Stromquelle (300) zu laden und die Hilfsstromversorgung (110) durch den Lastschaltkreis (200) zu entladen, wobei der Lade-/Entladeschaltkreis (120) einen Schalter (190) zum Verbinden der unterbrechungsfreien Stromversorgung (100) mit und Trennen der unterbrechungsfreien Stromversorgung (100) von dem Lastschaltkreis (200) umfasst;
einen Spannungsmonitor (130), der dazu ausgebildet ist, eine Spannung zu überwachen, die die Stromversorgung von der Stromquelle (300) an die unterbrechungsfreie Stromversorgung (100) anzeigt; und
eine Steuereinheit (140), die für Folgendes ausgebildet ist:
Erzeugen eines Steuersignals zum Herunterfahren des Lastkreislaufs (200) in Reaktion auf eine Unterbrechung in der Stromversorgung von der Stromquelle (300), basierend auf der Spannung, die von dem Spannungsmonitor (130) überwacht wird;
Überwachen eines Betriebsstatus des Lastkreislaufs (200) nachdem das Steuersignal erzeugt wurde, um zu ermitteln, ob der Lastschaltkreis (200) heruntergefahren wurde;
beim Ermitteln, dass der Lastschaltkreis heruntergefahren wurde, Veranlassen des Lade-/Entladeschaltkreises (120) von dem Lastschaltkreis (200) durch Öffnen des Schalters (190) getrennt zu werden; und
nachdem die Unterbrechung in Stromversorgung von der Stromquelle (300) beendet wurde, Veranlassen des Lade-/Entladeschaltkreises (120), durch Schließen des Schalters (190) wieder mit dem Lastschaltkreis (200) verbunden zu werden.

2. Unterbrechungsfreie Stromversorgung (100) nach Anspruch 1, wobei die Steuereinheit (140) dazu ausgebildet ist, Erzeugen des Steuersignals zum Herunterfahren des Lastschaltkreises (200) nach dem Beginn der Unterbrechung in der Stromversorgung von der Stromquelle (300) zu verzögern, wobei die Verzögerung von der Last abhängt, die der Lastschaltkreis für die unterbrechungsfreie Stromversorgung (100) darstellt.

3. Unterbrechungsfreie Stromversorgung (100) nach Anspruch 2, wobei der Spannungsmonitor (130) dazu ausgebildet ist, eine Spannung über die Hilfsstromversorgung (110) zu überwachen und die Steuereinheit (140) dazu ausgebildet ist, das Steuersignal zum Herunterfahren des Lastschaltkreises (200) zu erzeugen, wenn die Spannung über die Hilfsstromversorgung (110) auf einen Schwellenwert gesunken ist.

4. Unterbrechungsfreie Stromversorgung (100) nach einem der Ansprüche 1, 2 und 3, wobei die Hilfsstromversorgung (110) einen oder mehrere Kondensatoren umfasst, wobei die unterbrechungsfreie Stromversorgung weiter einen Kondensatorentladeschaltkreis (160) umfasst, der eine Widerstandskomponente (162) und einen anwenderbedienbaren Schalter (164) aufweist, wobei der Kondensatorentladeschaltkreis (160) eingerichtet ist, den einen oder die mehreren Kondensatoren zu veranlassen, durch die Widerstandskomponente (162) zu entladen, wenn der anwenderbedienbare Schalter (164) von dem Anwender bedient wird.

5. Unterbrechungsfreie Stromversorgung (100) nach einem vorstehenden Anspruch, wobei die Steuereinheit (140) dazu ausgebildet ist, als das Steuersignal zum Herunterfahren des Lastschaltkreises eine Sequenz von Anfragen für den Lastschaltkreis (200) herunterzufahren, zu erzeugen.

6. Unterbrechungsfreie Stromversorgung (100) nach einem vorstehenden Anspruch, wobei die Hilfsstromversorgung (110) einen oder mehrere Superkondensatoren umfasst.

7. Unterbrechungsfreie Stromversorgung (100) nach einem vorstehenden Anspruch, wobei der Lastschaltkreis (200) einen Prozessor umfasst.

8. Unterbrechungsfreie Stromversorgung (100) nach Anspruch 7, wobei der Lastschaltkreis (200) eine Computerhauptplatine umfasst, die den Prozessor aufweist.

9. Einrichtung, umfassend eine unterbrechungsfreie Stromversorgung (100) nach einem vorstehenden Anspruch und den Lastschaltkreis (200), wobei der Lastschaltkreis (200) von der Steuereinheit (140) steuerbar ist herunterzufahren und dazu ausgebildet ist, hochzufahren, wenn detektiert wird, dass eine Spannung über einem vorgegebenen Niveau von der unterbrechungsfreien Stromversorgung (100) dazu eingegeben wird.

10. Einrichtung nach Anspruch 9, weiter umfassend einen GS-GS-Wandler (400), der angeordnet ist, eine Ausgangsspannung des Lade-/Entladeschaltkreises (120) zu einer Spannung zum Antreiben des Lastschaltkreises (200) umzuwandeln.

11. Verfahren zum Steuern einer unterbrechungsfreien Stromversorgung (100) zum Versorgen eines Lastschaltkreises (200) mit Strom von einer Stromquelle (300), wobei die unterbrechungsfreie Stromversorgung (100) umfasst:
eine Hilfsstromversorgung (110) zum Versorgen des Lastschaltkreises (200) mit Strom im Fall einer Unterbrechung der Stromversorgung durch die Stromquelle (300);
einen Lade-/Entladeschaltkreis (120), der betriebsfähig ist, die Hilfsstromversorgung (110) von der Stromquelle (300) zu laden und die Hilfsstromversorgung (110) durch den Lastschaltkreis (200) zu entladen, wobei der Lade-/Entladeschaltkreis (120) einen Schalter (190) zum Verbinden der unterbrechungsfreien Stromversorgung (100) mit und Trennen der unterbrechungsfreien Stromversorgung (100) von dem Lastschaltkreis (200) umfasst; und
einen Spannungsmonitor (130), der dazu ausgebildet ist, eine Spannung zu überwachen, die die Stromversorgung von der Stromquelle (300) an die unterbrechungsfreie Stromversorgung (100) anzeigt;
das Verfahren umfassend:
Erzeugen (S10) eines Steuersignals zum Herunterfahren des Lastkreislaufs (200) in Reaktion auf eine Unterbrechung in der Stromversorgung von der Stromquelle (300), basierend auf der Spannung, die von dem Spannungsmonitor (130) überwacht wird;
Überwachen (S20) eines Betriebsstatus des Lastkreislaufs (200) nachdem das Steuersignal erzeugt wurde, um zu ermitteln, ob der Lastschaltkreis (200) heruntergefahren wurde;
beim Ermitteln, dass der Lastschaltkreis (200) heruntergefahren wurde, Veranlassen (S30) des Lade-/Entladeschaltkreises (120) von dem Lastschaltkreis (200) durch Öffnen des Schalters (190) getrennt zu werden; und
nachdem die Unterbrechung in Stromversorgung von der Stromquelle (300) beendet wurde, Veranlassen (S40) des Lade-/Entladeschaltkreises (120), durch Schließen des Schalters (190) wieder mit dem Lastschaltkreis (200) verbunden zu werden.

12. Verfahren nach Anspruch 11, wobei die Erzeugung des Steuersignals zum Herunterfahren des Lastschaltkreises (200) nach dem Beginn der Unterbrechung in der Stromversorgung von der Stromquelle (300) verzögert wird, wobei die Verzögerung von der Last abhängt, die der Lastschaltkreis für die unterbrechungsfreie Stromversorgung (100) darstellt.

13. Verfahren nach Anspruch 12, wobei eine Spannung über die Hilfsstromversorgung (110) überwacht wird und das Steuersignal zum Herunterfahren des Lastschaltkreises (200) erzeugt wird, wenn die Spannung über die Hilfsstromversorgung (110) auf einen Schwellenwert gesunken ist.

14. Speichermedium (550), das Computerprogrammanweisungen zur Ausführung durch einen Prozessor (520) speichert, der in einer unterbrechungsfreien Stromversorgung (100) bereitgestellt ist, wobei die unterbrechungsfreie Stromversorgung (100) weiter umfasst:
eine Hilfsstromversorgung (110) zum Versorgen des Lastschaltkreises (200) mit Strom im Fall einer Unterbrechung der Stromversorgung durch die Stromquelle (300);
einen Lade-/Entladeschaltkreis (120), der betriebsfähig ist, die Hilfsstromversorgung (110) von der Stromquelle (300) zu laden und die Hilfsstromversorgung (110) durch den Lastschaltkreis (200) zu entladen, wobei der Lade-/Entladeschaltkreis (120) einen Schalter (190) zum Verbinden der unterbrechungsfreien Stromversorgung (100) mit und Trennen der unterbrechungsfreien Stromversorgung (100) von dem Lastschaltkreis (200) umfasst; und
einen Spannungsmonitor (130), der dazu ausgebildet ist, eine Spannung zu überwachen, die die Stromversorgung von der Stromquelle (300) an die unterbrechungsfreie Stromversorgung (100) anzeigt,
wobei die Computerprogrammanweisungen, wenn von dem Prozessor (520) ausgeführt, den Prozessor (520) veranlassen, ein Verfahren nach einem der Ansprüche 11 bis 13 durchzuführen.

15. Signal (560), das Computerprogrammanweisungen zur Ausführung durch einen Prozessor (520) trägt, der in einer unterbrechungsfreien Stromversorgung (100) bereitgestellt ist, wobei die unterbrechungsfreie Stromversorgung (100) weiter umfasst:
eine Hilfsstromversorgung (110) zum Versorgen des Lastschaltkreises (200) mit Strom im Fall einer Unterbrechung der Stromversorgung durch die Stromquelle (300);
einen Lade-/Entladeschaltkreis (120), der betriebsfähig ist, die Hilfsstromversorgung (110) von der Stromquelle (300) zu laden und die Hilfsstromversorgung (110) durch den Lastschaltkreis (200) zu entladen, wobei der Lade-/Entladeschaltkreis (120) einen Schalter (190) zum Verbinden der unterbrechungsfreien Stromversorgung (100) mit und Trennen der unterbrechungsfreien Stromversorgung (100) von dem Lastschaltkreis (200) umfasst; und
einen Spannungsmonitor (130), der dazu ausgebildet ist, eine Spannung zu überwachen, die die Stromversorgung von der Stromquelle (300) an die unterbrechungsfreie Stromversorgung (100) anzeigt,
wobei die Computerprogrammanweisungen, wenn von dem Prozessor (520) ausgeführt, den Prozessor (520) veranlassen, ein Verfahren nach einem der Ansprüche 11 bis 13 durchzuführen.

## Revendications

1. Alimentation électrique sans interruption (100) pour fournir de l'énergie à un circuit de charge (200) à partir d'une source d'alimentation (300), l'alimentation électrique sans interruption (100) comprenant :
une alimentation électrique auxiliaire (110) pour fournir de l'énergie au circuit de charge (200) en cas d'interruption de la fourniture d'énergie depuis la source d'alimentation (300) ;
un circuit de charge/décharge (120) opérationnel pour charger l'alimentation électrique auxiliaire (110) à partir de la source d'alimentation (300) et pour décharger l'alimentation électrique auxiliaire (110) via le circuit de charge (200), le circuit de charge/décharge (120) comprenant un commutateur (190) pour connecter l'alimentation électrique sans interruption (100) au circuit de charge (200), et déconnecter l'alimentation électrique sans interruption (100) de celui-ci ;
un moniteur de tension (130) configuré pour surveiller une tension qui est indicative de la fourniture d'énergie de la source d'alimentation (300) à l'alimentation électrique sans interruption (100) ; et
un dispositif de commande (140) configuré pour :
générer un signal de commande pour arrêter le circuit de charge (200) en réponse à une interruption de la fourniture d'énergie depuis la source d'alimentation (300), sur la base de la tension surveillée par le moniteur de tension (130) ;
surveiller un état opérationnel du circuit de charge (200) après avoir généré le signal de commande pour déterminer si le circuit de charge (200) s'est arrêté ;
lors de la détermination que le circuit de charge s'est arrêté, amener le circuit de charge/décharge (120) à être déconnecté du circuit de charge (200) en ouvrant le commutateur (190) ; et
après la fin de l'interruption de la fourniture d'énergie depuis la source d'alimentation (300), amener le circuit de charge/décharge (120) à être reconnecté au circuit de charge (200) en fermant le commutateur (190).

2. Alimentation électrique sans interruption (100) selon la revendication 1, dans laquelle le dispositif de commande (140) est configuré pour retarder la génération du signal de commande pour arrêter le circuit de charge (200) après le début de l'interruption de la fourniture d'énergie depuis la source d'alimentation (300), ledit retard dépendant de la charge présentée à l'alimentation électrique sans interruption (100) par le circuit de charge.

3. Alimentation électrique sans interruption (100) selon la revendication 2, dans laquelle le moniteur de tension (130) est configuré pour surveiller une tension sur l'alimentation électrique auxiliaire (110), et le dispositif de commande (140) est configuré pour générer le signal de commande pour arrêter le circuit de charge (200) lorsque la tension sur l'alimentation électrique auxiliaire (110) a diminué jusqu'à une valeur de seuil.

4. Alimentation électrique sans interruption (100) selon l'une quelconque des revendications 1, 2 et 3, dans laquelle l'alimentation électrique auxiliaire (110) comprend un ou plusieurs condensateurs, l'alimentation électrique sans interruption comprenant en outre un circuit de décharge de condensateur (160) présentant un composant résistif (162) et un commutateur (164) pouvant être actionné par un utilisateur, le circuit de décharge de condensateur (160) étant agencé de manière à amener les un ou plusieurs condensateurs à se décharger à travers le composant résistif (162) lorsque le commutateur (164) pouvant être actionné par un utilisateur est actionné par l'utilisateur.

5. Alimentation électrique sans interruption (100) selon une quelconque revendication précédente, dans laquelle le dispositif de commande (140) est configuré pour générer, en tant que signal de commande pour arrêter le circuit de charge, une séquence de demandes d'arrêt du circuit de charge (200).

6. Alimentation électrique sans interruption (100) selon une quelconque revendication précédente, dans laquelle l'alimentation électrique auxiliaire (110) comprend un ou plusieurs supercondensateurs.

7. Alimentation électrique sans interruption (100) selon une quelconque revendication précédente, dans laquelle le circuit de charge (200) comprend un processeur.

8. Alimentation électrique sans interruption (100) selon la revendication 7, dans laquelle le circuit de charge (200) comprend une carte mère d'ordinateur présentant le processeur.

9. Appareil comprenant une alimentation électrique sans interruption (100) selon une quelconque revendication précédente et le circuit de charge (200), le circuit de charge (200) pouvant être commandé par le dispositif de commande (140) pour s'arrêter et étant configuré pour démarrer lors de la détection d'une tension supérieure à un niveau prédéterminé lui étant appliquée par l'alimentation électrique sans interruption (100).

10. Appareil selon la revendication 9, comprenant en outre un convertisseur CC-CC (400) agencé pour convertir une tension de sortie du circuit de charge/décharge (120) en une tension pour alimenter le circuit de charge (200) en énergie.

11. Procédé de commande d'une alimentation électrique sans interruption (100) pour fournir de l'énergie à un circuit de charge (200) à partir d'une source d'alimentation (300), l'alimentation électrique sans interruption (100) comprenant :
une alimentation électrique auxiliaire (110) pour fournir de l'énergie au circuit de charge (200) dans le cas d'une interruption de la fourniture d'énergie depuis la source d'alimentation (300) ;
un circuit de charge/décharge (120) opérationnel pour charger l'alimentation électrique auxiliaire (110) à partir de la source d'alimentation (300) et pour décharger l'alimentation électrique auxiliaire (110) via le circuit de charge (200), le circuit de charge/décharge (120) comprenant un commutateur (190) pour connecter l'alimentation électrique sans interruption (100) au circuit de charge (200), et déconnecter l'alimentation électrique sans interruption (100) de celui-ci ; et
un moniteur de tension (130) configuré pour surveiller une tension qui est indicative de la fourniture d'énergie de la source d'alimentation (300) à l'alimentation électrique sans interruption (100) ;
le procédé comprenant les étapes consistant à :
générer (S10) un signal de commande pour arrêter le circuit de charge (200) en réponse à une interruption de la fourniture d'énergie depuis la source d'alimentation (300), sur la base de la tension surveillée par le moniteur de tension (130) ;
surveiller (S20) un état opérationnel du circuit de charge (200) après avoir généré le signal de commande pour déterminer si le circuit de charge (200) s'est arrêté ;
lors de la détermination que le circuit de charge (200) s'est arrêté, amener (S30) le circuit de charge/décharge (120) à se déconnecter du circuit de charge (200) en ouvrant le commutateur (190) ; et
après la fin de l'interruption de la fourniture d'énergie depuis la source d'alimentation (300), amener (S40) le circuit de charge/décharge (120) à être reconnecté au circuit de charge (200) en fermant le commutateur (190).

12. Procédé selon la revendication 11, dans lequel la génération du signal de commande pour arrêter le circuit de charge (200) est retardée après le début de l'interruption de la fourniture d'énergie depuis la source d'alimentation (300), ledit retard dépendant de la charge présentée à l'alimentation électrique sans interruption (100) par le circuit de charge.

13. Procédé selon la revendication 12, dans lequel une tension sur l'alimentation électrique auxiliaire (110) est surveillée, et le signal de commande pour arrêter le circuit de charge (200) est généré lorsque la tension sur l'alimentation électrique auxiliaire (110) a diminué jusqu'à une valeur de seuil.

14. Support de stockage (550) stockant des instructions de programme informatique destinées à être exécutées par un processeur (520) prévu dans une alimentation électrique sans interruption (100), l'alimentation électrique sans interruption (100) comprenant en outre :
une alimentation électrique auxiliaire (110) pour fournir de l'énergie au circuit de charge (200) dans le cas d'une interruption de la fourniture d'énergie depuis la source d'alimentation (300) ;
un circuit de charge/décharge (120) opérationnel pour charger l'alimentation électrique auxiliaire (110) à partir de la source d'alimentation (300) et pour décharger l'alimentation électrique auxiliaire (110) via le circuit de charge (200), le circuit de charge/décharge (120) comprenant un commutateur (190) pour connecter l'alimentation électrique sans interruption (100) au circuit de charge (200), et déconnecter l'alimentation électrique sans interruption (100) de celui-ci ; et
un moniteur de tension (130) configuré pour surveiller une tension qui est indicative de la fourniture d'énergie de la source d'alimentation (300) à l'alimentation électrique sans interruption (100),
dans lequel les instructions de programme informatique, lorsqu'elles sont exécutées par le processeur (520), amènent le processeur (520) à exécuter un procédé selon l'une quelconque des revendications 11 à 13.

15. Signal (560) transportant des instructions de programme informatique destinées à être exécutées par un processeur (520) prévu dans une alimentation électrique sans interruption (100), l'alimentation électrique sans interruption (100) comprenant en outre :
une alimentation électrique auxiliaire (110) pour fournir de l'énergie au circuit de charge (200) dans le cas d'une interruption de la fourniture d'énergie depuis la source d'alimentation (300) ;
un circuit de charge/décharge (120) opérationnel pour charger l'alimentation électrique auxiliaire (110) à partir de la source d'alimentation (300) et pour décharger l'alimentation électrique auxiliaire (110) via le circuit de charge (200), le circuit de charge/décharge (120) comprenant un commutateur (190) pour connecter l'alimentation électrique sans interruption (100) au circuit de charge (200), et déconnecter l'alimentation électrique sans interruption (100) de celui-ci ; et
un moniteur de tension (130) configuré pour surveiller une tension qui est indicative de la fourniture d'énergie de la source d'alimentation (300) à l'alimentation électrique sans interruption (100),
dans lequel les instructions de programme informatique, lorsqu'elles sont exécutées par le processeur (520), amènent le processeur (520) à exécuter un procédé selon l'une quelconque des revendications 11 à 13.
